# EUROPEAN PATENT APPLICATION

(11) **EP 4 008 173 A1**
(43) Date of publication of application: **08.06.2022**
(21) Application number: 21168291.9
(22) Date of filing: 14.04.2021
(51) Int. Cl.: A01G 31/00, A01G 9/24

(54) **A CONTROL SYSTEM FOR AN AQUAPONIC PLANT**

(30) Priority: 02.12.2020 IT 202000029537
(71) Applicant: Airesearch S.r.l., 00133 Roma RM (IT)
(72) Inventor: Ferrari, Giordano, Roma RM (IT); Grella, Matteo, Torino TO (IT)
(74) Representative: Perani & Partners S.p.A.

(57) **Abstract**

In an aquaponic installation (1), environments for plant-growing (6), aquaculture (4) and bacterial culture (5) exchange water (W) and are in biological equilibrium. A control system (100) for the plant (1) comprises sensors (111) which collect chemical-physical-biological data (D_{cfb}) on such environments (4, 5, 6). Images (I) of the environments (4, 5, 6) are also captured and undergo image recognition (AI₁) by a computer (140). The computer (140) has an artificial intelligence which additionally identifies (AI₂) correlations between the image data (Di) and the chemical-physical-biological data (D_{cfb}) to provide missing data (M). Based on predictions, the artificial intelligence selects (AI₃) the optimal control inputs (I_{c}) to be provided to actuators (151), which influence the chemical-physical-biological parameters to optimize the culture yield.

## Description

### Field of the invention

The present invention relates to aquaponic cultivation.

### Background art

In the near future, human population growth will increase food requirements to an extent that will not be fulfilled with current typical cultivation techniques. In this context, cultivation yield needs to be enhanced, by decreasing the land and water consumption required for the growth of a culture and reducing seasonal restrictions in product availability.

In addition, there is an increasing demand for products of high biological quality, grown without using chemicals that might be harmful for the environment and injurious to the health of consumers.

Aquaponic culture is suited to provide such advantages. It utilizes symbiotic combination of water-grown plants and aquatic animals. The waste substances produced by aquatic animals, after adequate filtering and conversion in bioreactors in which particular bacteria grow, become nutrients for plants, which grow health and purify water for aquatic animals.

### Summary of the invention

The object of the present invention is to allow aquaculture to be conducted in a controlled context for optimized production. In particular, production yield should be quantitatively and qualitatively maximized, with minimized resource consumption, and with a healthy and appropriate life cycle for the various farmed/grown animal and plant species.

Another object of the invention is full automation of the installation, requiring minor human intervention and hence involving a low risk of human errors, and that allows to market essentially self-managed installations, to encourage their diffusion.

This and other objects are fulfilled by a control system for an aquaponic installation, and also by an aquaponic installation and a network of aquaponic installations, as defined in any of the accompanying claims.

According to the invention, the control system uses a series of input channels, represented for example by sensors and user interfaces, to monitor at regular intervals physical parameters of the installation, such as temperatures and water flows, chemical parameters, such as pH and concentration of oxygen or other substances, and biological parameters, such as the species in the installation.

A further input is obtained from imaging devices, and optionally video or sound capturing devices.

All these inputs provide a set of big data that is collected in a preferably cloud-based database and is analyzed by a computer using artificial intelligence.

Artificial intelligence comprises several algorithms, which in preferred embodiments are implemented as distinct artificial intelligences. The first algorithm encodes the images, and other optional complex input data, to provide a set of data designed to be interpreted by the second algorithm.

The second algorithm compares the different growing cycles and identifies a predictive correlation that can reconstruct missing data values from available data. Thus, it can also indicate which chemical-physical-biological parameters and image characteristics are associated with successful growing cycles, by comparing information from sensors, image recognition, and feedback from a user of the installation.

The third algorithm uses the predictions of the second algorithm to determine optimal control inputs for operation of the installation. The control inputs, which are provided as output by the computer, may be directed automatically or by a user to appropriate actuators that influence the chemical-physical-biological parameters of the installation.

Further characteristics and advantages of the invention will be recognizable by a skilled person from the following detailed description of exemplary embodiments of the invention.

### Brief description of figures

To facilitate understanding of the following detailed description, certain embodiments of the invention are shown in the accompanying drawings, in which:
- Figure 1 schematically shows an exemplary aquaponic installation,
- Figure 2 schematically shows a control system for an aquaponic installation according to one embodiment of the invention, and its interactions with certain parts of the aquaponic installation,

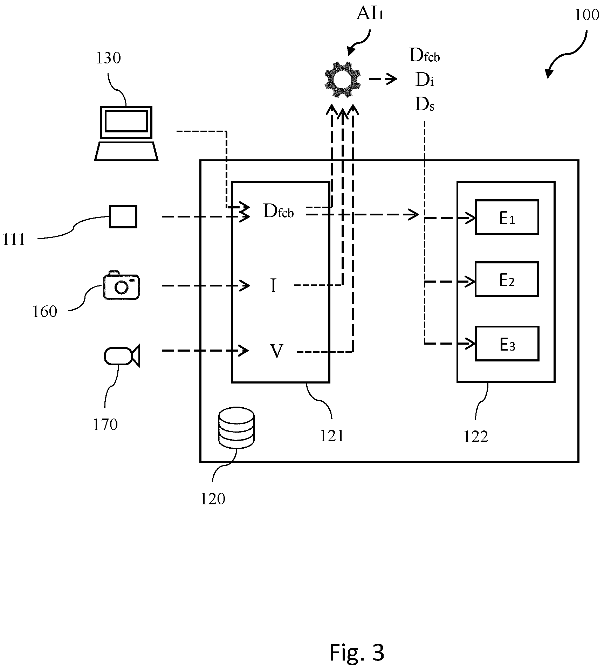

- Figures 3 to 4 schematically show certain interactions inside the control system of Figure 2.

### DETAILED DESCRIPTION

The figures show an aquaponic system 1 with its control system 100 according to one embodiment of the invention. Certain construction features of the installation 1 will be first described, for improved understanding of the following description of its control system 100.

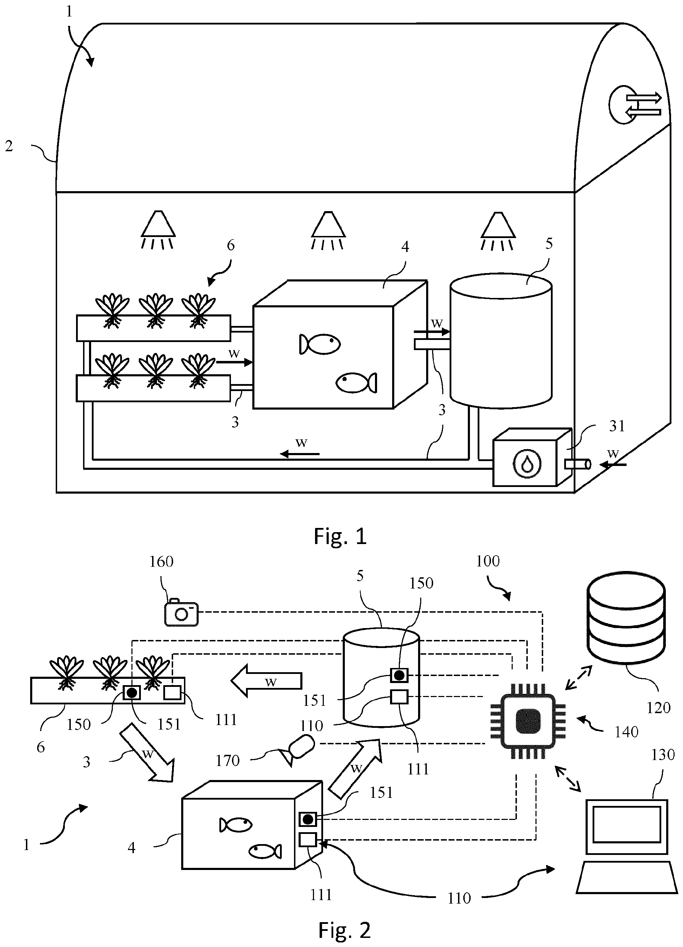

The installation 1 comprises an essentially closed and non-isolated environment 2, having accesses, vents and hydraulic or other connections. The environment 2 may be, for example, a greenhouse, as shown in Figure 1, or may entirely occupy another type of dedicated building, or only a part of a larger building. The environment 2 in turn contains the environments and structures as described below, either in a single room or in different rooms.

The installation 1 comprises a water circulation system 3. The water circulation system 3 may be composed of pipes, pumps, valves, filters, purifiers and all those hydraulic components that may be used to carry and treat water as described below.

The water circulation system 3 comprises a refill-water treatment system 31, located at water main. The treatment system 7 is configured to remove impurities and adjust water quality parameters using one or more of the aforementioned components.

These components will not be further described and are only briefly shown in the figures, as they are generally known to the skilled person, who is able to easily combine them for the purposes as stated below. Nevertheless, the figures show the water circulation direction by means of arrows referenced W.

The installation 1 comprises an aquaculture environment 4. The water circulation system 3 is connected to the aquaculture environment 4 to feed water thereto and draw water therefrom.

The aquaculture environment 4 comprises at least one tank for farming a plurality of aquatic animals. Aquatic animals may include fish, but also, for example, crustaceans or gastropods. Aquatic animals must be fed regularly, and their body produces aquaculture waste substances. These waste substances are emitted into water, for example as excrements or through the gills, and may include substances such as ammonia, potassium, phosphorus and magnesium.

The installation 1 further comprises a bacterial culture environment 5, for example by means of a bioreactor. The water circulation system 3 is connected to the bacterial culture environment 5 to feed water thereto and draw water therefrom. In particular, the water circulation system 3 is configured to carry water containing aquaculture waste substances from at least one tank of the aquaculture environment 4 to the bacterial culture environment 5.

The bacterial culture environment 5 comprises a container that encloses water-submerged bacteria. Bacteria from the bacterial culture environment 5 are suitable to convert aquaculture waste substances into plant nutrients. One example of such bacteria are nitrifying bacteria (e.g. Nitrosomonas, Nitrobacter), which are suitable for convert ammonia into nitrites and then into nitrates. It should be noted that ammonia is generally harmful to plant growth, whereas nitrates facilitate it, as they constitute the main nutrition source therefor. Nevertheless, a skilled person may also envisage the presence of different types of bacteria as deemed useful for an aquaponic installation.

The installation also comprises a plant growing environment 6 adapted for cultivation of a plurality of plants. The water circulation system 3 is connected to the plant growing environment 6 to feed water thereto and draw water therefrom. In particular, the water circulation system 3 is configured to carry water containing nutrients for the plants of the plant growing environment from the bacterial culture environment 5. In addition, the water circulation system 3 is configured to carry clean water from the plant growing environment to at least one tank of the aquaculture environment 4. This is because plants, in fact draw aquaculture waste substances (once converted by bacteria into plant nutrients) whose accumulation would be harmful to aquatic animals.

The plant growing environment 6 comprises hydroponic tanks. Hydroponic tanks include plant supports, which, for terrestrial plants, are configured to keep the plants submerged, by the roots, in the water of the tanks, and exposed to air by the remaining parts such as stem, leaves and fruits.

Finally, the water circulation system 3 is configured to supply water from the outside to such an extent as to keep the water level in the plant growing environment 6, the aquaculture environment 4 and the bacterial culture environment 5 substantially constant. The amount of water supplied from the outside is very low, since the water circulating between the three main environments 4, 5, 6 is essentially consumed only for feeding plants and compensating for natural evaporation. The operation of the refill-water treatment system 31 is adjusted according to the water flow so established.

Figure 1 shows the water main connected to the pipe that connects the bacterial culture environment 5 to the plant growing environment 6. Nevertheless, this is only one of the possible connections of the water main and has been chosen for graphic simplicity.

It should be noted that the state of the various environments of the installation 1 at a given instant can be described by means of a plurality of physical, chemical and biological parameters. One example of such physical parameters is the temperature, namely air temperature or water temperature at one or more points of the water circulation system 3, or in one or more of the plant growing environment 6, the aquaculture environment 4 or the bacterial culture environment 5.

Additional physical parameters are air pressure or humidity. A further physical parameter is light radiation, which, as explained hereinafter, can relate to natural light radiation or artificial light radiation, e.g. means of suitable growth lamps. Yet another physical parameter is the electrical conductivity of water.

Additional physical parameters are hydraulic parameters such as water flow rate and/or level or in one or more of the water circulation system 3 or in one or more of the plant growing environment 6, the aquaculture environment 4 and the bacterial culture environment 5.

Examples of chemical parameters are pH, oxygen concentration in water, and the redox potential of water. Relevant chemical parameters may further be concentrations of further chemicals in water, such as ammonia, nitrites, nitrates and pollutants. Nevertheless, these indications shall be intended without limitation, only as examples of some of the substances whose concentration may be of interest, and which may include nutrients or toxic substances, including various types of salts, acids and bases.

Each of these chemical parameters may be assessed in a location of the installation 1 that is deemed the most appropriate by the skilled person, or in several different locations.

Finally, non-limiting examples of biological parameters are the plant species grown in the plant growing environment 6, the aquatic species farmed in the aquaculture environment 4, the type of bacteria in the bacterial culture environment 5, the type of seed used for plants, as well as the presence, absence, amount and/or type of bacteria, fungi, parasites or pests in any part of the installation 1. Further biological parameters may be the state of health or the level of maturation of plants, aquatic animals or bacteria. The color of a plant may be considered in some respects as a biological parameter, and in others as a physical parameter.

The control system 100 comprises a plurality of input channels 110 configured to load a plurality of pieces of chemical-physical-biological data D_{cfb} into the control system 100, representing at least some of the above discussed chemical-physical-biological parameters. In particular, as discussed below, the input channels 110 are configured to load the chemical-physical-biological data D_{cfb} into a database 120.

It should be noted that, as used herein, "chemical-physical-biological parameters" relate to quantitative or qualitative properties of the aquaponic installation 1, that are present regardless of the operation of the control system 100. On the other hand, "chemical-physical-biological data" D_{cfb} relate to computer entities loaded into the control system 100 which describe, numerically or otherwise, at least one aspect of corresponding chemical-physical-biological parameters.

The input channels 110 comprise a plurality of sensors 111 for acquiring first chemical-physical-biological data D_{cfb}. The sensors 111 are preferably in signal communication with the database 120, either directly or indirectly via a computer 140, as further described below. Therefore, the sensors 111 are preferably configured for automatic periodic transmission of the first chemical-physical-biological data D_{cfb} to the database 120.

Signal communication preferably employs wireless technologies such as WiFi and Bluetooth, but wired connections are also admitted. In the figures, signal communication channels of a preferred example are represented by dashed lines or arrows.

Each sensor 111 may be configured to periodically acquire the corresponding piece of chemical, physical, or biological data D_{cfb}. Instead of or in addition to the above, each sensor 111 may be in signal communication with the computer 140, which may in turn be configured to periodically send to the sensors 111 commands for acquiring the first chemical-physical-biological data D_{cfb}.

Non-limiting examples of sensors 111 in the preferred embodiments are thermometers, humidity sensors, pressure switches, flow switches, water level probes, light intensity or radiation sensors, pH-meters, oxygen meters for oxygen concentration in water, conductivity meters for water conductivity, redox meters for the redox potential of water, and analyzers of nutrients, or macro- and micro-nutrients in water.

The sensors 111 are obviously arranged in the installation 1 in positions that the skilled person will easily recognize as the most suitable for measuring the various chemical-physical-biological parameters as discussed above. Nevertheless, the input channels and corresponding sensors 111 (each being an input channel 110, even when the dual reference 110, 111 is not shown in the figures) are shown in a simplified manner, in a smaller number and in exemplary positions.

In addition to the sensors 111, the control system 100 may comprise a user interface 130, which can act as an additional input channel 110 and allow a user to input second chemical-physical-biological data D_{cfb}. These can be data acquired by sensors 111 with no signal communication with the database 120, or data that can be known by the user but for which no direct measurement by sensors 111 is provided, such as the type of seeds selected for the plants, particular climatic conditions or else.

It should be noted that, while the first chemical-physical-biological data D_{cfb} may mostly be simple numerical variables, the second chemical-physical-biological data D_{cfb} are mostly expected as verbal data, or other types of data, having a greater computing complexity. Examples of these are the species of a cultivated plant, the species of a farmed aquatic animal, the type of seeds selected for the plants, as well as a feedback provided by an indication of yield obtained during a period of cultivation.

The yield may be indicated in terms of an amount of product harvested, a time of culture maturity, or indications about product quality or about the general state of health of the product. The quality indication may also be a simple binary indication of positive or negative quality. A yield feedback may relate to plants grown in the plant growing environment 6, or to the aquatic animals in the aquaculture environment 4.

However, in certain embodiments the user interface 130 does not act as an input channel 110, but has other functions as set forth below.

In the preferred embodiment, the user interface 130 is provided by an application that can be loaded on a pc, a smartphone or a tablet. Nevertheless, other types of user interfaces 130 may be provided, generally comprising screens and control members, such as keyboards, mice, buttons or sensitive screen areas.

In addition to the input channels 110, the control system 100 comprises a plurality of output channels 150, each configured to condition at least one said chemical-physical-biological parameters according to a respective control input I_{c}. The output channels 150 comprise a plurality of actuators 151 arranged in the installation 1, still in the positions that will be considered more appropriate by a skilled person based on the nature of the actuator and the chemical, physical or biological parameter to be influenced. The output channels 150 and corresponding actuators 151 (each being an output channel 150, even when the dual reference 150, 151 is not shown in the figures) are only shown in exemplary form, in a smaller number and in exemplary positions.

Preferably, the actuators 151 are in signal communication with the computer 140, which is configured to periodically send the control inputs I_{c} to the actuators 151. In less advantageous alternatives, the control inputs I_{c} may be provided to one or more of the actuators 151 by the user, especially in the case of actuators 151 not in signal communication with the computer 140.

In case of automatic communications, the sensors 111, the actuators 151, the database 120 and the computer 140 form together an Internet of things network.

It should be noted that the user interface 130 may operate in addition to the output channels 150, to notify the user of some of the control inputs I_{c} to be provided to the actuators 151. Moreover, the user interface 130 may be configured to provide the user with indications about possible actions for influencing the chemical-physical-biological parameters, for which no intervention of actuators 151 is provided.

Non-limiting examples of actuators 151 provided in the preferred embodiments are heat pumps, water pumps, hydraulic valves, air fans, humidifiers, blowers for feeding air or oxygen into water, filter cleaners, light sources, light shielding devices, UV germicidal lamps, disinfecting agent dispensers and reverse osmosis devices.

On the other hand, non-limiting examples of actions that can be suggested by the user interface 130 are selecting particular plant or aquatic species for a future culture cycle, feeding the aquatic animals, and performing various types of maintenance on the installation 1. Therefore, it shall be understood that the actions carried out by the user on indication of the user interface 130, without actuators 151, can also influence one or more of the chemical-physical-biological parameters.

As mentioned above, the control system 100 comprises a preferably cloud-based database 120. The database 120 is configured to receive and store the chemical-physical-biological data D_{cfb} loaded from the input channels 110. In the database 120, the pieces of chemical-physical-biological data D_{cfb} are organized in a time sequence of events. The figures schematically show events E₁, E₂, E₃, E₄, but the letter E will be simply used to designate any one of them.

More in detail, the database 120 comprises a first data structure 121 and a second data structure 122. The chemical-physical-biological data D_{cfb} are initially loaded into the first data structure 121, where they are preferably only temporarily stored.

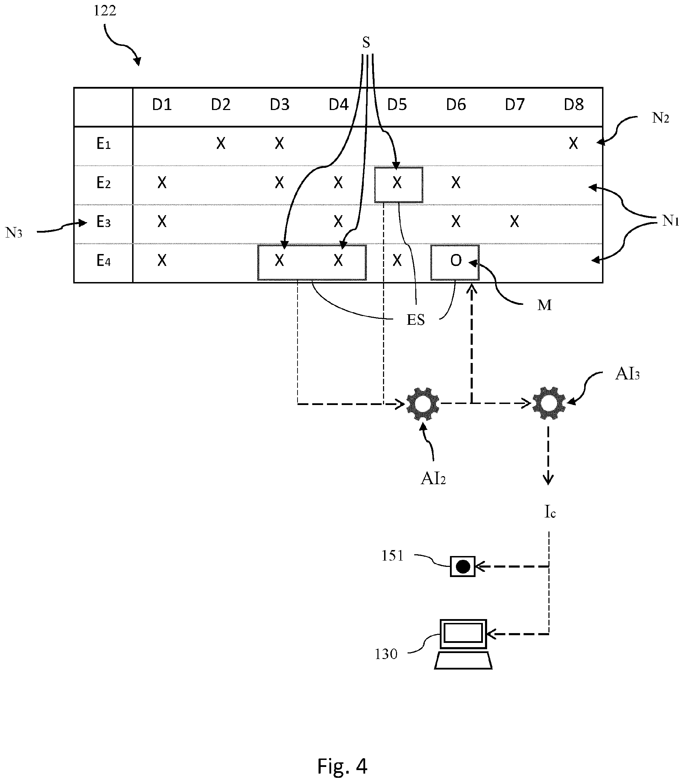

The second data structure 122 is organized by events E. Preferably, the second data structure 122 is organized in tabular form (as shown in Figure 4), and each row of the table corresponds to an event E. The columns represent the different types of chemical-physical-biological data D_{cfb}, and other data that will be introduced later and that can be loaded into the database 120. Therefore, a particular piece of data acquired at different times by the same sensor or device will always be loaded in the same column, but in different rows.

In Figure 4, due to the different nature of the data that can be used for the columns, references D1-D8 have been used, where some of such data is intended as chemical-physical-biological data D_{cfb}, and other is data that will be introduced later.

In particular, the computer 140 is configured to transfer the chemical-physical-biological data D_{cfb} from the first data structure 121 to the second data structure 122, with each piece of data being associated with a respective event E (row). Some pieces of chemical-physical-biological data D_{cfb}, preferably including those with numerical variables, may be transferred to the second data structure 122 as they are. Other pieces of chemical-physical-biological data D_{cfb}, including preferably those with verbal variables, are transferred to the second data structure 122 after suitable conversions as discussed below.

It should be noted that, each event E has associated pieces of data having one or more aspects in common, e.g. acquisition time and subject to which the data relates.

While reference will be made hereinafter to this type of tabular organization, it shall be understood that alternative organizations for the events E may be envisaged. For example, the rows and the columns of the table may be exchanged.

The control system 100 includes one or more imaging devices 160, such as cameras. The imaging devices 160 are configured to capture a plurality of images I of at least the plant growing environment 6. Preferably, the imaging devices 160 are configured to acquire a plurality of images I also of the aquaculture environment 4.

Optionally, the control system 100 also comprises one or more video capturing devices 160 and/or sound capturing devices (not shown) configured to capture a plurality of video V and/or sounds in the installation, particularly in the plant growing environment 6 and/or aquaculture environment 4. The video and/or sound capturing devices will collectively be referred to as sequential capture devices 170, due to the dynamic nature of the data being captured and the processing affinity as discussed later.

The imaging devices 160 and/or the sequential devices 170 operate with the input channels 110 as discussed above, but capture information that is more complex than the chemical-physical-biological data D_{cfb}. In particular, the imaging devices 160 or the sequential devices 170 are in signal communication with the computer 140 to receive commands for acquiring images I, videos V and/or sounds. They are also in direct or indirect signal communication with the database 120, to send the captured images I, videos V and/or sounds thereto. The database 120 is configured to receive and store time sequences of the captured images I, videos V and/or sounds, in particular in the first data structure 121. Then, the processing as described below will allow transfer thereof to the second data structure 122.

The database 120 then accumulates a set of big data, including chemical-physical-biological data D_{cfb}, the images I and optionally the videos V and/or sounds collected, for different time points.

As mentioned above, the control system 100 comprises a computer 140, whose main function is to analyze the time sequences of data D_{cfb}, images I and (optionally) videos V and/or sound stored in the database 120 by means of artificial intelligence AI₁, AI₂, AI₃. Based on this analysis, the optimal conditions for future operation of the installation 1 are determined.

The artificial intelligence AI₁, AI₂ , AI₃ will be described as comprising three algorithms. These algorithms can form together a single artificial intelligence or be artificial intelligences that cooperate together but are essentially independent in their internal operating mechanisms. Some of the described algorithms may also consist in turn of multiple artificial intelligences essentially independent of one another.

The first artificial intelligence algorithm AI₁ has the main purpose of encoding complex non-numerical information into the database 120, namely into the first data structure 121, so that it can be reduced to numbers or vectors of numbers to be associated with events E. The data thus transformed can be transferred into the second data structure 122, and made available for the other algorithms AI₂, AI₃ together with the data already acquired in numerical form, such as the first chemical-physical-biological data D_{cfb}.

The first artificial intelligence algorithm AI₁ contains instructions of analyzing the images I in the database 120, namely in the first data structure 121. The analysis of each image I in the database 120 is aimed at obtaining a respective image data set D_{I} from each image I. Each image data set D_{I} can then be associated by the computer 140 to one of the events E in the database 120, and subsequently loaded into the second data structure 122 with the chemical-physical-biological data D_{cfb}.

The first algorithm AI₁ preferably contains instructions of image recognition that are part of known artificial intelligence models, such as convolutional networks, namely convolutional capsule networks, recurrent neural networks, attention mechanisms, and reinforcement learning mechanisms, such as the policy gradient mechanism.

In the preferred embodiment, the image data set D_{I} derived from each image I is represented by an output vector of numerical image data. More in detail, the first algorithm AI₁ contains instructions of obtaining a primitive vector of image data from each image I, and then to combine the image data of the primitive vector, according to a given combination, to thereby obtain the output vector. The primitive vector can be given, for example, by a combination of the pixels that make up image I.

It should be noted that the type of combination of image data that leads from the input vector to the output vector may be a complex combination, actually resulting from successive combinations that pass through a certain number of intermediate vectors. Moreover, as further described below, different types of combinations can be used for vectors connected to different images I, especially in case of images I from different imaging devices 160, but also images I from the same imaging device 160 at different times.

The output vector is intended primarily for use within the artificial intelligence AI₁, AI₂, AI₃, specifically by the second algorithm AI₂. In the preferred embodiment, the output vector is a vector that can be trained by the second artificial intelligence AI₂, as further described below.

Accordingly, the image data contained in the output vector is not generally designed to be intelligible to a human being. There can be still embodiments in which the image data is semantic information directly understandable to a human being, such as the presence, the size and the color of a given visual subject in the image I, which might be a plant or an aquatic animal or similar information related to a single part of such persons, such as leaves, fruits, flowers, branches, stem, and roots, for a plant, or fins, tail, eyes, mouth and gills, for a fish. Other similar information may be undesired elements in the installation 1 such as weed, parasites, corpuscles suspended in a tank, or other signs of poor health of a visual subject.

While this semantic information is preferably not directly contained in the image data obtained by the first algorithm, it can in any case be inferred or provided by other parts of the artificial intelligence, in particular the second algorithm AI₂, based on the image data.

In the preferred embodiments, the first algorithm AI₁ comprises machine learning instructions of optimizing image recognition. Such instructions may be, for example, comparing different images I in which a visual subject is known to be present (for example because this is known based on information loaded by the user via the user interface 130).

Other instructions included may be of exploring new combinations of image data, which are used to turn from the primitive vector to the output vector. These explorations are aimed at causing the output vector to contain one or more pieces of image data that are indicative of characteristics shared by the subjects of different images.

In some embodiments, the automatic learning of the first algorithm AI₁ is accelerated by loading a predetermined dataset into the database 120. The predetermined dataset includes images I that are not necessarily captured in the aquaponic installation 1. The images I of the preset dataset are pre-labeled with indications of visual subjects in the image I.

The first algorithm AI₁ thus contains instructions of comparing the images I of the dataset to provide an output vector representative of the presence of one or more visual subjects.

In parallel with the analysis of the images I, an analysis of the videos V and/or sounds that have been loaded into the first data structure 121 of the database 120 is also provided. Since the purpose of this analysis is still processing complex non-numerical information to derive numerical or vector data, this function is here attributed to the first artificial intelligence algorithm AI₁. However, a skilled person will understand that image recognition and sound and/or video recognition can be performed by substantially distinct and independent artificial intelligences, which occurs in the preferred embodiment. For example, recognition of videos V and/or sounds can be attributed to a fourth artificial intelligence algorithm.

In detail, the first algorithm AI₁ contains instructions of retrieving a respective sequence data Dₛ) from each video V and/or sound, preferably given by a sequence data vector Dₛ. The sequence data vector Dₛ can then be associated with an event E and inserted into the second data structure 122 with other types of data, as already discussed.

Preferably, the instructions of recognizing videos V and/or sounds are one or more types of instructions that are part of known artificial intelligence models, such as transformer models, for example reformer.

A further function of encoding complex data, to make them available in numerical form in the second data structure 122, is connected to the verbal data that is loaded into the first data structure 121. Examples of verbal data as mentioned above include at least some of the chemical-physical-biological data D_{cfb}, especially the second chemical-physical-biological data D_{cfb}, that is the data loaded via the user interface.

Before being transferred to the second data structure 122 with the chemical-physical-biological data D_{cfb} that are already in numerical form, the verbal data are converted, whereby respective vector-valued variables are obtained.

While also the verbal data conversion function is here conceptually attributed to the first algorithm AI₁, it shall be understood that the functions of recognition of images I, videos V, sounds and of conversion of verbal data are essentially carried out by separate artificial intelligences. In particular, for conversion of verbal data, known word embedding models of artificial intelligence are preferred, which can therefore represent a fifth artificial intelligence algorithm.

It should be noted that each of the vector data introduced preferably occupies a single "cell" in the tabular representation of the second data structure 122. Therefore, while some cells are occupied by one-dimensional numerical data (for example, the pH measured for a given event E by a given sensor 111), other cells are occupied by vector data (for example, the image data set D_{I} for a particular image I that has been captured for an event E by a given imaging device 160).

The second artificial intelligence algorithm AI₂ has the main purpose of analyzing all the data that has been loaded into the second data structure 122 of the database 120, to determine a predictive correlation therebetween. In particular, predictive correlation is obtained by instructions of comparing, for different events E, at least the respective chemical-physical-biological data D_{cfb}, and image data sets D_{I}, but also sequential data Dₛ, if any.

The predictive correlation is a set of mathematical relationships, each of which determines, for an event E, an estimate of at least one missing piece of data M, according to an associated estimator function. Each estimator function is based on respective source data S, selected from the various types of data stored in the database 120, particularly in the second data structure 122.

Both the missing piece of data M and the source data S may be chosen indifferently from the image data D_{I}, the chemical-physical-biological data D_{cfb}, and the optional sequential data Dₛ.

It should be noted that the functional links that can be contemplated in the context of predictive correlation are not necessarily limited to a specific type of mathematical function, but may be expressed, for example, as linear, rational, exponential, or integral relationships, which can involve individual pieces of data, separately, or combinations of multiple pieces of data.

A known example of an artificial intelligence model that is suitable for performing some of the functions of the second algorithm is called TabNet. However, certain differences between the second algorithm AI₂ and TabNet will be highlighted in the following.

In detail, the second algorithm AI₂ comprises instructions of classifying the events E in the database 120 based on a plurality of event natures N. In Figure 4 some event natures are referenced N₁, N₂, N₃, but in the rest of the description only the letter N will be used to indicate any one of them. In Figure 4, the events E₂ and E₄ have the same nature N₁.

It should be noted in particular that for each event E (a row of the tabular representation) a certain number of pieces of data are available in the database 120 (columns of the tabular representation), and that for events E having different natures N different data may be available, differing by number and type.

The data available for a certain event E depends on the nature N of the event, i.e., for example, the periodicity with which the event E is repeated, the main subject of the event E, and the sensors 111 connected to such subject. The different subjects of different event natures N may include, for example, the plant growing environment 6, the aquaculture environment 4, the bacterial culture environment 5, the water circulation system 3, or for example individual plants or aquatic animals.

In other words, each nature N is distinguished by a certain data set available in the database 120 for each event E. Nevertheless, it may happen that one or more particular pieces of data will be missing in one event with respect to the other events E of the same nature N. Therefore, the rows of the tabular representation are only partially filled with data in the different columns.

In Figure 4, for example, the pieces of data are indicated by the symbol X. Moreover, one piece of data indicated by the symbol O and the reference M is missing, although the corresponding event nature N includes it among its characterizing data. Finally, various cells are left empty in the sense that they do not contain data, according to the respective event natures N that do not have those particular types of data among their own characterizing data.

In the preferred embodiment, the predictive correlation consists of a plurality of event correlations, each associated with a respective event nature N. Each event correlation therefore includes an estimate of a missing piece of data M connected to events E of that nature N.

In particular, the second algorithm AI₂ comprises instructions of selecting, for each event nature N, a respective event subset ES of the chemical-physical-biological data D_{cfb} and/or the image data sets D_{I} and/or the sequential data Dₛ. The event-correlation for that nature N is limited to a correlation involving only data of the event subset ES. Namely, each event correlation estimator function provides an estimate of at least one missing piece of data M of the event subset ES as a function of source data S (not missing) selected only in the event subset ES.

The subset-event ES, for a current event E comprises at least data selected from those characterizing the nature N of the event E, in particular, at least data relating to the current event E. However, as shown in Figure 4, some data characterizing the event nature N₁, such as the piece of data D1, may not be included in the event subset ES.

Preferably, unlike the known TabNet model, the event subset ES also comprises data for at least one previous event E (see data D5 in Figure 4). Preferably, the previous events E, of which additional data is selected, are selected from the events E associated with the same event nature N as the current event.

The fact of also considering data of previous events E accounts for the fact that subsequent events E of the aquaculture plant 1 are not completely independent of each other but represent successive observations of the same system in progressive evolution.

The second algorithm AI₂, however, contains instructions of assigning a coefficient of importance to the data of the event subset ES for a previous event E, and to progressively reduce the coefficient of importance, as the sequence of events increases the time distance of such previous event E from the current event E.

By limiting the event subsets ES to a restricted number of data, the interpretability of event correlations is increased. In particular, once the second algorithm AI₂ has calculated an estimate of a missing piece of date M by predictive correlation, and in particular from one of the event correlations, queries may be provided to the second algorithm AI₂ about the causes of the given estimate, obviously in addition to queries about the value of a missing piece of data M to be estimated. The query may also concern the causes of the difference in the given estimate from a target value, or from a value for which a value other than the expected value has been found.

Thus, the second algorithm AI₂ comprises instructions of answering such queries, by indicating at least one key piece of data to which the estimate is attributed, i.e. a piece of data which has been assigned a particular weight in the estimator function that led to the determination of the estimate, or to the difference between the estimate and the target/actual value. Therefore, the key piece of data is selected in the event subset ES, in particular from the source data S. Optionally, the answer to the query may also include the estimator function itself that has been used.

As pointed out above, the fact that the data involved in the event subset ES has been limited makes the answer given to the query more understandable, because a check is easily made on what the estimate was based on. Thus, this interpretation of the answer can check on the one hand whether the estimator function is based on reasonable source data S, i.e. actually correlated to the value to be estimated based on human knowledge, and on the other hand how to modify the estimated data by acting on the data that caused it.

It should be noted that the second algorithm AI₂ contains instructions of actively searching, by trial and error, for the optimal predictive correlation, i.e. the various event correlations. In particular, both the estimator functions and the optimal event subsets ES are searched in this way, which will improve the reliability level of the predictions performed, i.e. the given estimates.

In the preferred embodiment, the second algorithm AI₂ does not identify the predictive correlation starting from zero but comprises machine learning instructions of obtaining the predictive correlation starting from a starting suboptimal hypothetical correlation. The starting correlation may be loaded by the user or be pre-stored. The starting correlation provides a starting estimator function to estimate the missing piece of data M.

Starting from this starting correlation, the second algorithm AI₂ contains instructions of generating modified correlations which provide modified estimator functions for the missing piece of data M. The modified correlations are generated based on the comparison of the data that is associated with different events E, preferably, the comparison between events E with which the same nature N has been associated.

It should be noted that this correlation modification process generally proceeds through repetitions of an indeterminate number of culture cycles, throughout the life of the aquaponic installation 1. The first modification is carried out by changing the starting configuration and through successive cycles the previous modified correlation is changed from time to time.

Accordingly, in the preferred embodiments there is no single constant predictive correlation obtained as a final result, because this may be subject to change in subsequent cycles. Conversely, the most recent modified correlation may be temporarily taken as a predictive correlation, given by the result of the progressive modification of the starting correlation and a sequence of intermediate modified correlations, until a further subsequent modification occurs.

In this automatic learning mechanism of predictive correlation, the second algorithm AI₂ also acts on the first algorithm AI₁ to take advantage of the trainability of the vectors that it provides at its output, especially connected to the recognition of images I.

In particular, the second algorithm AI₂ comprises instructions of imparting learning commands for the output vector to the first instructions AI₁, under certain conditions. Such commands may sometimes explore new combinations of image data, which are used to pass from the primitive vector to the output vector. Otherwise, the instructions may be of repeating a combination of image data that has been previously used.

In response, the first algorithm AI₁ comprises instructions of exploring, when it receives its command, different combinations of image data to obtain the output vectors from the primitive vectors.

This mechanism causes the first algorithm AI₁ to be trained to enter information into the output vector, which information is in many cases not intelligible to a human being but is progressively more useful for the second algorithm AI₂ to increase the reliability of its predictions. That is, the second algorithm AI₂ contains instructions of imparting exploration commands when it judges that the image data contained in the output vector has a low level of utility in predictive correlation.

It should be noted that this learning also leads to differentiating combinations of image data between images captured by distinct imaging devices 160. For example, for two devices 160 that always image different subjects, different combinations of image data will be advantageously distinguished, for the output vectors to contain different information.

On the other hand, for images I captured by a specific imaging device 160, the changes in the combination of image data in successive events E converge toward an optimal combination.

The operation and potentialities of the second algorithm will be now summarized and exemplified. In the second data structure of the database 120 data of different natures is accumulated. Such data relates to the current state of the various environments of the installation 1, and historical series of similar previous data. The data also includes classification data about what is farmed or grown in the installation 1, and user-provided culture yield assessment data. Finally, there are various complex data, such as image, video, and sound encoding.

The various natures N of the possible events E observed by the control system 100 may include, for example, the daily acquisition of the data concerning a given plant. In certain events E of this nature N a large number of pieces of data will be entered, that is all those of the sensors 111 and capture devices 160, 170 connected to the plant and its environment, and any feedback or additional information from the user.

From these events the second algorithm AI₂ retrieves valid information for learning the predictive correlation. For example, it understands that the species indicated by the user is always related to certain image data D_{I} of the output vector and provides instructions to the first algorithm A1 for training the output vector, so that this changes to increase its level of representativeness of the indicated species. Similarly, it can recognize the state of health or maturation of the plant as related to the image data D_{I}.

Other useful correlations that can be found are, for example, that the state of health is worsened with respect to the state of health of a previous event E if temperature assumes a certain value, for example if it is too low. The correlation here links the data of subsequent events E.

In other events E, not all the desired data may be present. For example, feedback and additional user information may be absent, or data from one sensor 111 may be missing for some reason. In this case, the second algorithm AI₂ is able to estimate the missing data from learned correlations. However, these events E also facilitate learning of the predictive correlation.

If the second algorithm AI₂ is later queried, for example, about why the maturation state is late, it is able to answer that it is late because a particular parameter has been improperly adjusted, or to answer by drawing attention to a certain captured image I, because the predictive correlation indicates that historically such parameter or such image I has always been accompanied by a slow progress of the maturation state.

In all of these mechanisms, the artificial intelligence of the second algorithm AI₂ can discover links that would be difficult for a human being to predict. For example, it might find that a certain combination of aquatic animals is related to a particularly favorable growth of certain plant species.

The third artificial intelligence algorithm AI₃ contains instructions of determining optimal control input values I_{c} to be provided to the plurality of output channels 150, to cause the chemical-physical-biological parameters to achieve respective optimal values. The optimum values of the control inputs I_{c} are determined based on the predictive correlation identified by the second algorithm AI₂.

Preferably, the third algorithm AI₃ is at least partially based on queries made to the second algorithm AI₂. In detail, the third algorithm AI₃ comprises instructions of selecting a test piece of data from the chemical-physical-biological data D_{cfb} and the image data sets D_{I} related to an event E.

The test piece of data is a missing piece of data M for the second algorithm AI₂ and hence for the predictive correlation. In certain embodiments, it is missing because it has never been entered into the database 120, or at least it has never been entered into the second data structure 122. Indeed, it should be noted that the second algorithm AI₂ operates on the data in the second data structure 122.

In the preferred embodiment, the test piece of data is selected from the data that is stored in the database 120, but the third algorithm AI₃ comprises instructions of preventing the second algorithm AI₂ from accessing the test piece of data in the database 120. These instructions may be of preventing the transfer of the test piece of data from the first data structure 121 to the second data structure 122, or of at least temporarily removing the test piece of data from the second data structure 122, and storing it elsewhere in the database 120, for example reintroducing it into the first data structure 121.

Then, the third algorithm AI₃ comprises instructions of querying the second algorithm AI₂ on an estimated value for the test piece of data according to the predictive correlation. The estimated value provided by the second algorithm AI₂ is used to determine the optimal control inputs I_{c} to be provided to the plurality of output channels 150. Then, the optimal control inputs I_{c} are displayed on the user interface 130 and/or automatically communicated to the output channels 150 by the computer 140.

In greater detail, the third algorithm AI₃ comprises instructions of comparing the test data stored in the database 120 with the estimate of the test data given by the second algorithm AI₂. If their discrepancy exceeds a certain difference threshold, the second algorithm AI₂ will be queried about the causes of the discrepancy.

As described above, the answer of the second algorithm AI₂ indicates at least one key piece of data to which the discrepancy is attributed, selected from the source pieces of data S of the estimator function.

Therefore, the third algorithm AI₃ can make decisions to act on the key piece of data. In particular, the third algorithm comprises instructions of changing the optimal value of at least one control input I_{c} adapted to influence a future value of the key piece of data.

It results from what has been described hereinbefore that the second artificial intelligence algorithm AI₂ determines a certain amount of interdependencies between the current data stored in the database 120, as well as their expected values. Progressive refining of the predictive correlation by the second algorithm AI₂ may require data accumulation for a significant time.

A certain degree of variability is preferably provided in the collected data to prevent learning from being too slow. Variability exists if the chemical-physical-biological parameters are at least partly different through different culture cycles. The chemical-physical-biological parameters are controlled by the third algorithm AI₃ by selecting the control inputs I_{c} for the output channels 150.

In an initial learning phase, the correlation identified by the second algorithm AI₂ is assumed to be still less than optimal. However, this correlation allows the third algorithm AI₃ to select the values of the control inputs I_{c}, without knowing whether they are really optimal or not.

Each time a new culture cycle is conducted, if the inputs I_{c} in use at that time are deemed to be optimal, the chemical-physical-biological parameters are assumed to be very similar to those of the previous cycles. Accordingly, the second algorithm AI₂ has little new information available with respect to those that were already available.

It is therefore preferable that the output channels 150 will not be provided with all the control inputs I_{c} that are deemed to be optimal at all cycles, and that in at least some cycles the third algorithm AI₃ will provide at least some exploratory control inputs I_{c} to at least some of the output channels 150. The exploratory control inputs I_{c} are different from the optimal control inputs I_{c} but are however useful for the second algorithm AI₂ to change the current predictive correlation based on new chemical-physical-biological data D_{cfb}.

On the other hand, if exploratory control inputs I_{c} were frequently used instead of optimal control inputs I_{c}, a suboptimal culture yield would be obtained as frequently.

Therefore, the third algorithm AI₃ will preferably contain instructions of progressively reducing, through the culture cycles, the ratio of the number of exploratory control inputs I_{c} to the number of optimal control inputs I_{c} that are provided to the output channels 150.

In certain embodiments, faster learning of the predictive correlation by the second algorithm AI₂ may be also allowed by an exchange of information between different aquaponic installations 1.

Therefore, one aspect of the invention relates to a network of aquaponic installations 1, comprising a plurality of aquaponic installations 1. In this network, the control systems 100 of distinct aquaponic installations 1 are in signal communication with one another and are configured to exchange information about the predictive correlations identified in each aquaponic installation 1.

An aquaponic installation 1 which receives from another information about a predictive correlation may decide, based on instructions of the second algorithm AI₂, to compare its predictive correlation with the one it has received, and/or to test the received predictive correlation, and/or change its predictive correlation based on the comparison and/or the test.

In addition to information about their respective predictive correlations, aquaponic installations 1 may share part of their databases 120 for faster exploration of combinations of untested chemical-physical-biological parameters.

Preferably, the network of aquaponic installations 1 comprises a central server and a management interface (not shown), which allow a network manager to communicate with the computers 140 of different aquaponic installations 1. The communications exchanged may always concern information about predictive correlations, but also technical assistance issues for the management of individual aquaponic installations 1.

A skilled person may obviously envisage a number of equivalent changes to the above discussed variants, without departure from the scope defined by the appended claims.

## Claims

1. A control system (100) for an aquaponic installation (1), comprising:
- a plurality of input channels (110) configured for loading a plurality of pieces of chemical-physical-biological data (D_{cfb}) representative of chemical-physical-biological parameters of a plant growing environment (6), an aquaculture environment (4), a bacterial culture environment (5), and a water circulation system (3) of the aquaponic installation (1),
- a plurality of output channels (150), each configured to condition at least one of said chemical-physical-biological parameters according to a respective control input (I_{c}),
- one or more imaging devices (160) configured to capture a plurality of images (I) of at least said plant growing environment (6),
- a computer (140) equipped with artificial intelligence (AI₁, AI₂, AI₃), comprising a first algorithm (AI₁) containing instructions of analyzing said images (I) to obtain a respective image data set (D_{I}) from each image (I), and
- a database (120) configured to receive and store said chemical-physical-biological data (D_{cfb}) and said image data sets (D_{I}), arranged in a time sequence of events (E), each event (E) being associated with a respective plurality of pieces of said chemical-physical-biological data (D_{cfb}) and said image data sets (D_{I}),
wherein the computer (140) is further configured to analyze the time sequences of events (E) using the artificial intelligence (AI₁, AI₂, AI₃), which further comprises:
- a second algorithm (AI₂) containing instructions of comparing, for different events (E), the respective chemical-physical-biological data (D_{cfb}) and image data sets (D_{I}), to identify a predictive correlation therebetween, and
- a third algorithm (AI₃) containing instructions of determining, according to the identified predictive correlation, optimal control input values (I_{c}) to be provided to the plurality of output channels (150), for the chemical-physical-biological parameters to achieve respective optimal values.

2. A system as claimed in claim 1 wherein:
- the second algorithm (AI₂) comprises instructions of classifying said events (E) according to a plurality of event natures (N),
- the predictive correlation consists of a plurality of event correlations, each associated with a respective event nature (N), and
- the second algorithm (AI₂) comprises instructions of selecting, for each event nature (N), a respective event subset (ES) of the chemical-physical-biological data (D_{cfb}) and/or the image data sets (D_{I}), and to limit the corresponding event correlation to a correlation on the event subset (ES).

3. A system as claimed in claim 2, wherein at least one event subset (ES), related to a current event (E) classified according to a certain nature event (N), comprises chemical-physical-biological data (D_{cfb}) and/or image data sets (D_{I}) which are related to both the current event (E), and at least one previous event (E), optionally classified according to the same event nature (N).

4. A system as claimed in claim 2 or 3, wherein each event correlation comprises at least one estimator function for providing an estimate for at least one missing piece of data (M) of the event subset (ES) as a function of source data (S) selected from the chemical-physical-biological data (D_{cfb}) and the image data sets (D_{I}) of the event subset (ES).

5. A system any one of claims 1 to 4, wherein the third algorithm (AI₃) comprises instructions of:
- selecting a test piece of data from the chemical-physical-biological data (D_{cfb}) and the image data sets (D_{I}) related to an event (E),
- querying the second algorithm (AI₂) on an estimated value for the test piece of data according to the predictive correlation, and
- determining the optimal control inputs (I_{c}) according to such estimated value.

6. A system as claimed in claim 5 wherein:
- the test piece of data is selected from the data stored in the database (120),
- the third algorithm (AI₃) comprises instructions of preventing the second algorithm (AI₂) from accessing the test piece of data in the database (120), so that the test piece of data is a missing piece of data (M) for the predictive correlation,
- the third algorithm (AI₃) comprises instructions of comparing the test piece of data stored in the database (120) with the estimate for the test piece of data, and if their discrepancy exceeds a difference threshold, querying the second algorithm (AI₂) about the causes of the discrepancy,
- the second algorithm (AI₂) comprises instructions of answering the query about the causes of the discrepancy, by indicating at least one key piece of data that is deemed to cause the discrepancy, selected from the chemical-physical-biological data (D_{cfb}) and the image data set (D_{I}) that were used by predictive correlation for estimation,
- the third algorithm (AI₃) comprises instructions of changing the optimal value of at least one control input (I_{c}) adapted to influence a future value of the key piece of data.

7. A system as claimed in any of claims 1 to 6, wherein the first algorithm (AI₁) comprises instructions of image recognition (I), preferably based on convolutional networks, which are configured to:
- obtain a primitive vector of image data from each image (I),
- obtain an output vector of image data from each image (I), by a combination of the image data of the primitive vector and taking the output vector as the image data set (D_{I}) obtained from the image (I).

8. A system as claimed in claim 7 wherein:
- the first algorithm (AI₁) comprises instructions of exploring, when obtaining the output vectors from the primitive vectors, different combinations of image data,
- the second algorithm (AI₂) comprises instructions, when identifying the predictive correlation, of commanding the first instructions (AI₁) sometimes to explore new combinations of image data and sometimes to repeat a previously used combination of image data, as preferably obtained using TabNet neural network instructions, according to a sequential model.

9. A system as claimed in any of claims 1 to 8, wherein said input channels (110) comprise a plurality of sensors (111) for automatic acquisition of first chemical-physical-biological data (D_{cfb}) and a user interface (130) for input of second chemical-physical-biological data (D_{cfb}) by a user.

10. A system as claimed in any of claims 1 to 9, wherein:
- the chemical-physical-biological data (D_{cfb}) comprises a plurality of numerical-valued variables, preferably including at least one of: air temperature and/or humidity, radiation, water temperature, water flow rate and/or level, pH, gas concentration, salts, nutrients and/or other chemicals in water, and
- the chemical-physical-biological data (D_{cfb}) comprises a plurality of vector-valued variables, obtained by encoding, preferably by means of word embedding, a corresponding plurality of word pieces of data, preferably including at least one of: species of a cultivated plant, species of a farmed aquatic animal, type of seeds chosen for plants, state of health of a plant or an aquatic animal, and an indication of the yield achieved during a plant growing cycle.

11. A system as claimed in any of claims 1 to 10, comprising one or more sequential capture devices (170) for capturing a plurality of videos (V) and/or sounds of said plant growing environment (6) and/or aquaculture environment (4), wherein:
- the first algorithm (AI₁) contains instructions of retrieving a respective sequence data set (Dₛ) from each video (V) and/or sound, preferably given by a sequence data vector (Dₛ) obtained using transformer neural network instructions.

12. An aquaponic installation (1), comprising:
- a plant growing environment (6), adapted for cultivation of a plurality of plants,
- an aquaculture environment (4) comprising at least one tank for farming a plurality of aquatic animals,
- a bacterial culture environment (5), comprising bacteria adapted to convert aquaculture waste substances produced by the organisms of aquatic animals into plant nutrients,
- a water circulation system (3), configured to:
- carry, to the bacterial culture environment (5), water containing aquaculture waste substances withdrawn from the at least one tank of the aquaculture environment (4),
- carry, to the plant growing environment (6), water containing plant nutrients received from the bacterial culture environments (5),
- carry, to the at least one tank of the aquaculture environment (4), clean water received from the plant growing environment (6)
- supply enough water from the outside to maintain a substantially constant water level in plant growing, aquaculture and bacterial culture environments (4, 5,6),
- a control system (100) as claimed in any of claims 1 to 11.

13. A network of aquaponic installations (1), comprising a plurality of aquaponic installations (1) as claimed in claim 12, wherein the control systems (100) of distinct aquaponic installations (1) are in signal communication with one another and are configured to exchange information about the predictive correlations identified in each aquaponic installation (1).
